(19) Europäisches Patentamt
European Patent Office
Office européen des brevets

(11) Veröffentlichungsnummer: **0 030 662**
**B1**

(12) # EUROPÄISCHE PATENTSCHRIFT

(45) Veröffentlichungstag der Patentschrift: **07.09.83**

(51) Int. Cl.³: **C 04 B 35/66**, C 04 B 35/44

(21) Anmeldenummer: **80107429.5**

(22) Anmeldetag: **27.11.80**

(54) **Feuer- und Isolierbetonversätze, Verfahren zur Herstellung von Feuer- und Isolierbetonsteinen und deren Verwendung als Fertigbauteile für industrielle Öfen.**

(30) Priorität: **05.12.79 DE 2948978**

(43) Veröffentlichungstag der Anmeldung: **24.06.81 Patentblatt 81/25**

(45) Bekanntmachung des Hinweises auf die Patenterteilung: **07.09.83 Patentblatt 83/36**

(84) Benannte Vertragsstaaten: **AT CH FR GB LI SE**

(56) Entgegenhaltungen:
**DD-A-120 866**
**DE-A-2 115 132**
**DE-A-2 558 972**
**FR-A-2 384 729**

(73) Patentinhaber: **Popescu-Has D. Dr., Berliner Strasse 284, D-6050 Offenbach (DE)**

(72) Erfinder: **Popescu-Has D. Dr., Berliner Strasse 284, D-6050 Offenbach (DE)**

(74) Vertreter: **Patentanwälte Müller-Boré, Deufel, Schön, Hertel, Lewald, Otto, Postfach 86 07 20 Siebertstrasse 4, D-8000 München 86 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 030 662 B1

BUNDESDRUCKEREI BERLIN

# Feuer- und Isolierbetonversätze, Verfahren zur Herstellung von Feuer- und Isolierbetonsteinen und deren Verwendung als Fertigbauteile für industrielle Öfen

Feuerbetone sind definitionsgemäß Baustoffe, die aus einem hydraulisch erhärtenden Tonerdezement und feuerfesten Zuschlagstoffen verschiedener Art und Korngröße sowie Wasser bestehen und deren Kegelfallpunkt nach DIN 51 060 mindestens bei dem des kleinen Segerkegels (SK) 17 bzw. des ISO-Kegels 150 liegt. Die Anwendungstemperatur der feuerfesten Betone liegt zwischen 1100 und 1300°C. Als hochfeuerfeste Betone bezeichnet man hochtonerdehaltige Betone (>65 Gew.-% $Al_2O_3$), die mindestens dem Kegelfallpunkt des kleinen Segerkegels 36 bzw. des ISO-Kegels 180 entsprechen und bei Temperaturen über 1300°C verwendbar sind; vergl. A. Braniski: Hochfeuerfester Beton aus feuerfestem Barium-Tonerdezement, Tonind.-Ztg. 85 (1961), 129–135, und A. Petzold, M. Rohrs: Beton für hohe Temperaturen, Beton Verlag GmbH, Düsseldorf (1964).

Isolierbetone sind ebenfalls hydraulisch abbindende Baustoffe, die aus einem Tonerdezement und leichten feuerfesten Zuschlagstoffen mit niedriger Wärmeleitfähigkeit bestehen.

Die Feuerbetone unterscheiden sich von den »ungebrannten hochfeuerfesten Erzeugnissen« — auch »chemisch gebundene hochfeuerfeste Baustoffe« genannt — dadurch, daß die Feuerbetone monolithische (fugenlose) hochfeuerfeste Erzeugnisse sind.

Die Entwicklung von Feuer- und Isolierbetonen mit hoher Feuerfestigkeit ermöglichte eine steigende Anwendung von monolithischen, hydraulisch abbindenden Feuerfestbaustoffen für den Aufbau, die Auskleidung und die Reparatur industrieller Öfen. Insbesondere bei Verwendung großformatiger Fertigbauteile aus Feuerbeton kann hierbei eine wesentliche Senkung der Lohnkosten und Verkürzung der Arbeitszeit erreicht werden; vergl. J. T. Van Konijnenburg: Feuerfeste monolithische Materialien in der Stahlindustrie und ihre Anwendungskriterien, Sprechsaal 107 (1974), 873–880; und E. Struzik: Drehofenzustellung mit großformatigen feuerfesten Bauteilen, Ber. Dt. Keram. Ges. 52 (1975) 143–145.

Bei Tonerdezementen, die hydraulische Bindemittel für die Feuer- und Isolierbetone sind, unterscheidet man drei Typen:

(1) Handelsüblichen Tonerdezement (TZ hü), der auch als Tonerdeschmelzzement (TSZ) bezeichnet wird,
(2) hochtonerdehaltigen Tonerdezement (HTZ) und
(3) Barium-Tonerdezement (BTZ).

Die Calcium-Tonerdezemente bestehen aus Verbindungen von CaO und $Al_2O_3$ sowie aus geringen Mengen an $SiO_2$, $Fe_2O_3$, $TiO_2$ und MgO aus den Rohstoffverunreinigungen. Die Zusammensetzung der Tonerdeschmelzzemente liegt hauptsächlich im Feld der Primärausscheidung des $CaO \cdot Al_2O_3$ in den Systemen

$12\,CaO \cdot 7\,Al_2O_3 - CaO \cdot Al_2O_3 - 2\,CaO \cdot SiO_2$ und
$CaO \cdot Al_2O_3 - CaO \cdot 2\,Al_2O_3 - 2\,CaO \cdot Al_2O_3 \cdot SiO_2$.

Die hochfeuerfesten Tonerdezemente (>65 Gew.-% $Al_2O_3$), die zur Anfertigung der großformatigen Fertigbauteile für den Aufbau, die Auskleidung und die Reparatur industrieller Öfen verwendet werden, bestehen hauptsächlich aus den hydraulischen Bestandteilen $CaO \cdot Al_2O_3$ und $CaO \cdot 2\,Al_2O_3$ und lassen sich im Zweistoffsystem $CaO - Al_2O_3$ darstellen; vergl. H. Kuhl: Zement-Chemie, Verlag Technik, Berlin (1952).

Die Tonerdezemente sind teure Produkte, deren Herstellung eine spezielle, komplizierte Technologie erfordert. Sie werden unter großem Energieverbrauch durch Verschmelzen von Mischungen aus Kalkstein oder Branntkalk mit Bauxit oder anderen hochtonerdehaltigen Stoffen in Elektroöfen und anschließende Feinmahlung der erkalteten Schmelze gewonnen. Besonders teuer sind die hochtonerdehaltigen Tonerdezemente, zu deren Herstellung $\gamma$-$Al_2O_3$ benötigt wird. Die kurze Abbindezeit der Tonerdezemente mit $Al_2O_3$-Gehalten bis zu 70 Gew.-%, deren hauptsächliche hydraulische Komponente $CaO \cdot Al_2O_3$ ist, und die zu lange Abbindezeit der anderen Tonerdezemente mit höheren $Al_2O_3$-Gehalten, die neben $CaO \cdot Al_2O_3$ auch $CaO \cdot 2\,Al_2O_3$ enthalten, erschweren die Herstellung der Feuerbetone, für welche nur bestimmte Temperaturbereiche empfohlen werden. Das Abbinden der Feuerbetone mit Tonerdezementen ist infolge der großen Hydratationswärme der Calciumaluminate mit einer Temperatursteigerung verbunden, die für die Werkstücke gefährlich ist. Außerdem erfordern die hergestellten Fertigbauteile nach der Formgebung besondere Nachbehandlungen.

Bei der Hydratation von $CaO \cdot Al_2O_3$ und $CaO \cdot 2\,Al_2O_3$ bildet sich zunächst die metastabile Phase $CaO \cdot Al_2O_3 \cdot 10\,H_2O$, die oberhalb 25°C in die stabile Phase $3\,CaO \cdot Al_2O_3 \cdot 6\,H_2O$ und $\alpha$-$Al(OH)_3$ (Gibbsit) übergeht. Die Umwandlung wird von einer Festigkeitsabnahme begleitet, die bei 110°C endet. Oberhalb 110°C geht $\alpha$-$Al(OH)_3$ in $\gamma$-AlOOH (Böhmit) über, und die Festigkeit nimmt wieder zu.

Die Herstellung von $3\,CaO \cdot Al_2O_3 \cdot 6\,H_2O$, das eine stabile Hydratationsphase im Feuerbetonstein ist, auf einem anderen Weg als durch Hydratation von $CaO \cdot Al_2O_3$ und $CaO \cdot 2\,Al_2O_3$, z. B. durch

hydrothermale Behandlung von 3 CaO · $Al_2O_3$ oder von stöchiometrischen Mischungen aus $Ca(OH)_3$ und $Al(OH)_3$ oberhalb 150° C ist bekannt; vgl. Taylor, H. W.: The Chemistry of Cements, Academic Press, London, New York (1964). In den JA-A-153 039/1975 und 37 899/1976 ist die Herstellung von Werkstücken aus 3 CaO · $Al_2O_3$ · 6 $H_2O$ durch Dampfhärtung eines Gemisches aus $Ca(OH)_2$ und $Al(OH)_3$ mit einem Molverhältnis $Al_2O_3$ : CaO CaO von 1 : 2,5 bis 4 beschrieben. Diese Produkte, die nach der Dampfhärtung zwischen 80 und 150° C nur 3 CaO · $Al_2O_3$ · 6 $H_2O$ als Hydratationsphase enthalten, können aber nicht als Feuerfestbaustoffe verwendet werden. Beim Aufheizen oberhalb 400° C zersetzt sich nämlich 3 CaO · $Al_2O_3$ · 6 $H_2O$ unter Bildung von 12 CaO · 7 $Al_2O_3$ und CaO, wobei das 12 CaO · 7 $Al_2O_3$ keine feuerfeste Komponente darstellt, da es bei 1455° C kongruent schmilzt.

Die DE-A-2 115 132 beschreibt die Herstellung von dampfgehärteten hochtonerdehaltigen feuerfesten Materialien, bei denen das Bindemittel aus 5 bis 50 Gew.-% feinzerteiltem reaktionsfähigem Aluminiumoxid besteht, das durch Kalzinieren bzw. Rösten des Aluminiumhydrates oder anderer zersetzbarer Aluminiumverbindungen im Bereich von 200 bis 1300° C hergestellt wird. Zur Erhöhung der Festigkeit sowie der Maß- bzw. Formhaltigkeit können auch Zusätze von 1 bis 5 Gew.-% an gelöschtem Kalk eingesetzt werden. Die Mischungen mit Zusätzen von gelöschtem Kalk, die naturgemäß die Feuerfestigkeit der hergestellten Materialien erniedrigen, weisen ein niedriges Molverhältnis auf, das zwischen 1 : 3,6 und 1 : 7 liegt.

In der FR-A-2 384 729 wird ein Verfahren zur Herstellung von dampfgehärteten Baumaterialien aus Erdmineralien oder industriellen Nebenprodukten mit Zusätzen von Kalk und Zement beschrieben, die als Betonmassen zum Pflastern von Straßen oder zum Abdachen von Kanälen sowie zur Herstellung von geformten Baumaterialien Betonwerkstoffen gleichwertig verwendet werden. Als Beispiel wird auch eine Mischung aus Bauxiten mit Zusätzen von Kalk erwähnt. Die mit dieser Mischung hergestellten dampfgehärteten Materialien sind jedoch keine feuerfesten Werkstoffe. Die Bauxite sind natürliche Minerale, die je nach der Gesteinsart, aus welcher sie durch Verwitterung hervorgegangen sind, neben der Hauptkomponente $Al(OH)_3$ (vgl. Harders/Kienov: Feuerfestkunde, Springer Verlag, Berlin, (Göttingen), Heidelberg 1960) bis 45 Gew.-% $SiO_2$, 25 Gew.-% $Fe_2O_3$ und 12 Gew.-% $TiO_2$ enthalten können. Beim Brand entstehen neben den Eutektika mit niedrigen Schmelztemperaturen (zwischen 1170 und 1430° C) aus dem System $CaO-Al_2O_3-SiO_2$ auch durch Reaktion des $Fe_2O_3$ mit CaO Calciumferrite, deren Schmelztemperaturen unterhalb 1500° C liegen. Durch die Reaktion des $Fe_2O_3$ mit dem freien $SiO_2$ treten gemäß dem Phasendiagramm $FeO - SiO_2$ zwei Eutektika mit einer Schmelztemperatur von 1180° C auf, und es bildet sich als neue Phase der Fayalit (2 FeO · $SiO_2$), der kongruent bei 1205° C schmilzt.

Der Erfindung liegt die Aufgabe zugrunde, Feuer- und Isolierbetone ohne Tonerdezement zu erzeugen, die bei gleicher Zusammensetzung wie herkömmliche Feuer- und Isolierbetone mit Tonerdezement zumindest gleichwertige Anwendungseigenschaften, insbesondere auch höhere Feuerfestigkeit, besitzen.

Ferner ist es Aufgabe der Erfindung, ein Verfahren zur Herstellung derartiger Feuer- und Isolierbetone bereitzustellen, das einfach und ohne Verwendung von teuren Tonerdezementen mit billigen Rohstoffen bei niedrigem Energieverbrauch durchgeführt werden kann.

Es wurde nun gefunden, daß bei der Herstellung von Feuer- und Isolierbetonen aus Bindemittelmischungen, die Kalkhydrate und Aluminiumhydrate in einem Molverhältnis CaO : $Al_2O_3$ von 1,5 : 1 bis 1 : 3 enthalten, sowie Zuschlagstoffen und Wasser durch hydrothermale Reaktion von $Ca(OH)_2$ mit $Al(OH)_3$ bei einer Temperatur von 110 bis 190° C 3 CaO · $Al_2O_3$ · 6 $H_2O$ und $\gamma$-AlOOH erhalten werden, die die wichtigsten und stabilen Hydratationsphasen des CaO · $Al_2O_3$ und CaO · 2 $Al_2O_3$ darstellen.

Die nach der hydrothermalen Behandlung der Betonmischung ausgeschiedenen Gefügebestandteile entsprechen somit den Hydratationsphasen der Tonerdezemente. Neben den kubischen 3CaO · $Al_2O_3$ · 6$H_2O$-Kristallen liegen auch pseudo-hexagonalprismatische Kristalle des restlichen $\alpha$-$Al(OH)_3$ und neu gebildete rhombisch-prismatische Kristalle aus Böhmit ($\gamma$-AlOOH) vor. Die prismatischen Kristalle aus Böhmit und Gibbsit bilden eine Verfilzung, die ein stabiles Bindegerüst zwischen den Zuschlagkörnern gewährleistet und die kubischen 3CaO · $Al_2O_3$ · 6$H_2O$-Kristalle einschließt. Gelegentlich entstehen aus $CaCO_3$-Verunreinigungen des verwendeten Kalkhydrates auch pseudo-hexagonal-prismatische Kristalle aus 3 CaO · $Al_2O_3$ · $CaCO_3$ · 11 $H_2O$, die zum Gefügebindegerüst beitragen. Die nach der Dampfhärtung ausgeschiedenen kristallinen Phasen wurden röntgenografisch und rasterelektronenmikroskopisch identifiziert.

Die Feuerfestigkeit der gemäß vorliegender Erfindung hydrothermal gehärteten Feuerfestbaustoffe beruht darauf, daß beim Aufheizen oberhalb 110° C das restliche $\alpha$-$Al(OH)_3$ in $\gamma$-AlOOH und dieses oberhalb 300° C in $\gamma$-$Al_2O_3$ übergeht. Weiterhin reagiert das $\gamma$-$Al_2O_3$ mit 12 CaO · 7 $Al_2O_3$ und CaO, die durch die Entwässerung des 3 CaO · $Al_2O_3$ · 6 $H_2O$ oberhalb 400° C entstehen. Dabei bilden sich oberhalb 900° C CaO · $Al_2O_3$ und CaO · 2 $Al_2O_3$, die hohe Feuerfestigkeit besitzen.

Die erfindungsgemäßen Bindemittelmischungen enthalten Kalkhydrate und Aluminiumhydrate in einem Molverhältnis CaO : $Al_2O_3$ von 1,5 : 1 bis 1 : 3.

Bindemittelmischungen mit einem Molverhältnis CaO : $Al_2O_3$ von 1,5 : 1 bis 1 : 1 haben einen $Al_2O_3$-Gehalt von 55 bis 65 Gewichtsprozent; sie können die handelsüblichen Tonerdeschmelzzemente (TSZ) bei der Herstellung von Feuer- und Isolierbetonen ersetzen. Letztere enthalten neben den

hydraulischen Bestandteilen auch Gehlenit (2 CaO · $Al_2O_3$ · $SiO_2$) und infolge der $Fe_2O_3$-Verunreinigungen der Rohstoffe auch 2 CaO · $Fe_2O_3$, 4 CaO · $Al_2O_3$ · $Fe_2O_3$, $Fe_2O_3$ · FeO, 2 $Fe_2O_3$ · $SiO_2$ etc., die die Feuerfestigkeit beeinträchtigen. So liegt die Feuerfestigkeit eines handelsüblichen Tonerdeschmelzzements mit einem niedrigen $Fe_2O_3$-Gehalt (ca. 3 Gewichtsprozent $Fe_2O_3$) bei etwa 1440°C. Demgegenüber enthalten die erfindungsgemäßen Bindemittelmischungen bei einem Molverhältnis CaO : $Al_2O_3$ von 1,5 : 1 bis 1 : 1 weniger als 1 Gewichtsprozent $Fe_2O_3$ und ihre Feuerfestigkeit variiert in Abhängigkeit vom $Al_2O_3$-Gehalt zwischen 1460 und 1590° C.

Bindemittelmischungen mit einem Molverhältnis CaO : $Al_2O_3$ von 1 : 1 bis 1 : 3 können die bekannten hochtonerdehaltigen Tonerdezemente (HTZ) bei der Herstellung von Feuerbetonen mit hoher Feuerfestigkeit ersetzen; ihr $Al_2O_3$-Gehalt beträgt 65 bis 85 Gewichtsprozent und ihre Feuerfestigkeit liegt zwischen 1580 und 1760° C. Die höchstzulässigen Temperaturen an der Feuerseite von Zustellungen aus erfindungsgemäß hergestellten Feuerbetonen werden durch das Molverhältnis CaO : $Al_2O_3$ und die Feuerfestigkeit der Zuschlagstoffe bestimmt.

Zur Herstellung der erfindungsgemäßen Bindemittelmischungen für Feuer- und Isolierbetone werden als Rohstoffe vorzugsweise verwendet:

– Technische Aluminiumtrihydroxide mit mindestens 65 Gewichtsprozent $Al_2O_3$ und maximal 0,5 Gewichtsprozent $Na_2O$ und
– Weißfeinkalkhydrat mit mindestens 70 Gewichtsprozent CaO, maximal 10 Gewichtsprozent MgO und maximal 5 Gewichtsprozent $CO_2$; Korngröße gekennzeichnet durch 0 Gewichtsprozent Rückstand auf dem Prüfsiebgewebe 0,063 nach DIN 4188 bzw. ISO/R 565-1967.

Um den Wassergehalt der Betonpasten und damit die Porosität der Feuerbetone und die Nachschwindung beim Brand bis zu 1400° C zu senken, können geringe Zugaben von Betonverflüssiger (BV) — bis zu 1,0 Gewichtsprozent, bezogen auf die Bindemittelmenge — hinzugefügt und das Aluminiumtrihydroxid durch Böhmit bis zu 50 Gewichtsprozent ersetzt werden.

Gegenstand der Erfindung sind ferner Feuer- und Isolierbetonversätze, die die vorstehend beschriebenen Bindemittelmischungen und außerdem feuerfeste Zuschlagstoffe enthalten. Diese Zuschlagstoffe können von verschiedener Art und Korngröße sein. Um jedoch Feuer- und Isolierbetone mit guten Festigkeiten zu erzielen, sollten die verwendeten Zuschlagstoffe keine feinen Kornfraktionen (< 0,25 mm) enthalten, und das Mischverhältnis der verschiedenen Kornfraktionen wird vorzugsweise nach »Fuller« eingestellt; vgl. H. Piltz, S. Härig und W. Schulz: Technologie der Baustoffe, Dr. Lüdecke-Verlagsgesellschaft mbH, Heidelberg (1974).

Als Zuschlagstoffe eignen sich herkömmliche natürliche oder künstliche Materialien sowie entsprechende Gemische. Zur Herstellung von Feuerbetonen verwendet man z. B. Körner von neutralen oder basischen feuerfesten Zuschlagstoffen, wie hochgebrannte Schamotte, Sillimanit, Bauxit, Mullit, braunen Elektrokorund, weißen Elektrokorund, tabular Alumina (Tabular-Tonerde), Chromerz, Sintermagnesit, Chrommagnesit oder Schmelzprodukte. Zur Herstellung von Isolierbetonen werden z. B. Körner von Blähton, Vermiculit, Perlit, Leichtschamotte oder Hohlkugelkorund verwendet.

Die Feuer- und Isolierbetonversätze enthalten vorzugsweise 25 bis 40 Gewichtsprozent Bindemittelmischung und 60 bis 75 Gewichtsprozent Zuschlagstoffe.

Zur Herstellung von Feuer- und Isolierbetonen werden die Betonversätze mit Wasser versetzt und nach gegebenenfalls erfolgter Formgebung hydrothermal gehärtet. Die erfindungsgemäße Dampfhärtung wird üblicherweise 2 bis 24 Stunden bei 110 bis 190° C durchgeführt. Anschließend können die erhaltenen hydrothermal gehärteten Feuerfestbaustoffe z. B. bei 110° C getrocknet werden.

Das erfindungsgemäße Verfahren zur Herstellung von Feuer- und Isolierbetonen wird im folgenden anhand einer speziellen Ausführungsform, nämlich der Herstellung von Fertigbauteilen für den Aufbau, die Auskleidung und die Reparatur von industriellen Öfen, näher erläutert. Hierbei versteht es sich, daß die Erfindung nicht auf diese spezielle Ausführungsform beschränkt ist.

Zur Herstellung der Fertigbauteile aus den erfindungsgemäßen Feuer- und Isolierbetonen werden im einzelnen die folgenden Verfahrensschritte angewandt.

a) Homogenisierung der dosierten Bindemittelmischungen aus Kalk- und Aluminiumhydraten mit dem Molverhältnis CaO : $Al_2O_3$ entsprechend der gewünschten Feuerfestigkeit im Pulverzustand in einem geschlossenen Chargen-Zwangsmischer (z. B. Bauart Eirich) mindestens 30 min.
b) Herstellung von Feuer- und Isolierbetonversätzen aus der Bindemittelmischung und Zuschlagkörnern mit einer Feuerfestigkeit entsprechend der höchstzulässigen Temperatur an der Feuerseite von Zustellungen in einem Chargen-Zwangsmischer mindestens 15 min. Die erhaltenen Feuer- und Isolierbetonversätze können eingesackt und gelagert oder anschließend zu Beton weiterverarbeitet werden.
c) Herstellung des Betons durch Wasserzugabe und Homogenisierung. Da die eckigen Körner des Zuschlagstoffes den Mischvorgang erschweren, beträgt die Mischzeit mit Wasser mindestens 5 min. Die Wasserzugabe soll den Feuer- und Isolierbetonen eine so plastische Konsistenz

verleihen, daß ein leichtes Einbringen mit den verfügbaren Mitteln ermöglicht wird. Die Wasserzugabe hängt von der Korngröße und der Porosität des Zuschlagstoffes sowie vom Gehalt an Bindemittelmischung ab. Sie erfolgt nach dem einzuhaltenden Konsistenzmaß.

d) Die Formgebung der Fertigbauteile kann in einer oder mehreren Schichten (z. B. eine Feuerbeton- und eine Isolierbetonschicht) in blanken oder mit Blech überzogenen Holzformen, in temperaturbeständigen Kunststoff- oder Metallformen erfolgen. Die Formen müssen dicht sein, um Bindemittelschlamm-Verluste zu vermeiden, und gut eingeölt werden. Die Schwindung der erfindungsgemäßen Feuer- und Isolierbetone ohne Tonerdezemente ist nach der Härtung nicht signifikant; die Formen werden deshalb maßgerecht gefertigt. Die Feuer- und Isolierbetone werden in den Formen vorzugsweise maschinell verdichtet. Sie werden so lange gerüttelt, bis etwas Wasser an der freien Oberfläche erscheint. Ein leichtes Abstreichen und Glätten der freien Oberfläche ohne Wasser beendet den Vorgang.

e) Die geformten Fertigbauteile werden anschließend, vorzugsweise in Formen, dampfgehärtet. Für die Dampfhärtung können Durchzugkessel mit Deckel, die in der Kalksandsteinindustrie verwendet werden, dienen. Aufheiz- und Entspannungsgeschwindigkeit sollen der Größe und den Formaten der Fertigbauteile angepaßt werden, um die Produkte nicht unter Spannungen zu setzen.

f) Trocknung der Fertigbauteile nach der Dampfhärtung bei 110°C.

Das erfindungsgemäße Verfahren zur Herstellung von Feuer- und Isolierbetonen hat den Vorteil, daß es eine Verwendung der teuren Tonerdezemente und insbesondere der hochtonerdehaltigen Zemente, die eine komplizierte Herstellungstechnologie mit großem Energieverbrauch erfordern, vermeidet. Zur Herstellung der hydrothermal härtbaren Bindemittelmischungen der Erfindung werden billige Rohstoffe (Kalk- und Aluminiumhydrate) verwendet, und die Dampfhärtung wird bei niedrigen Temperaturen, d. h. mit niedrigem Energieverbrauch, in einfachen Anlagen durchgeführt.

Die erfindungsgemäß hergestellten Feuerbetone besitzen z. B. bei Verwendung von hochtonerdehaltiger Schamotte als Zuschlagstoff die folgenden, für die Beanspruchung günstigen Eigenschaften: Kaltdruckfestigkeit nach der Trocknung bei 110°C zwischen 22 und 42 $MN/m^2$ und eine Nachschwindung nach dem Brand bei 1400°C zwischen 1,2 und 2%. Diese Werte entsprechen in etwa denen von Feuerbetonen mit Tonerdezementen. Da die erfindungsgemäß hergestellten Feuer- und Isolierbetone nach der Dampfhärtung keine Gefügebestandteile enthalten, die ihre Feuerfestigkeit erniedrigen könnten, ist ihre Feuerfestigkeit bei gleichem $Al_2O_3$-Gehalt höher als die der bekannten Feuerbetone mit Tonerdezementen.

In der nachstehenden Tabelle sind Beispiele angegeben, die die Erfindung näher erläutern.

Beispiele von Feuerbetonen ohne Tonerdezement

| | Beispiel 1 | 2 | 3 | 4 | 5 | 6 | 7 | 8 |
|---|---|---|---|---|---|---|---|---|
| Bindemittelmischungen mit dem Molverhältnis (gerundet) CaO : $Al_2O_3$ | 1,5 : 1 | 1 : 1 | 1 : 1 | 1 : 1 | 1 : 2 | 1 : 2 | 1 : 2 | 1 : 2,5 |
| Weißfeinkalkhydrat Gew.-% | 16,5 | 13 | 13 | 13 | 8 | 8 | 8,5 | 6,5 |
| Aluminiumtrihydroxid (Hydrargillit) Gew.-% | 23,5 | 27 | 27 | 27 | 32 | 32 | 18 | 28 |
| Aluminiummonohydroxid (Böhmit) Gew.-% | – | – | – | – | – | – | 13,5 | 5,5 |
| Hochtonerdehaltige Schamotte | | | | | | | | |
| < 3 mm/Gew.-% | – | – | – | 60 | – | 60 | 60 | 60 |
| < 5 mm/Gew.-% | 60 | 60 | 60 | – | 60 | – | – | – |
| Wasser | | | | | | | | |
| $\frac{g\ H_2O}{100\ g\ Trockenmasse}$ | 12 | 12 | 12 | 12 | 12 | 12 | 12 | 12 |
| Härtungsdruck bar | 12 | 8 | 10 | 8 | 8 | 8 | 8 | 8 |
| Härtezeit bar | 4 | 8 | 4 | 8 | 7 | 8 | 8 | 8 |
| Kaltdruckfestigkeit nach der Trocknung bei 110° C MN/m$^2$ | 22 | 30 | 27 | 31 | 30 | 42 | 41 | 42 |
| Lineare Nachschwindung nach dem Brand bei 1400° C % | 2 | 1,3 | 1,5 | 1,3 | 1,2 | 1,3 | 1,3 | 1,2 |

**Patentansprüche**

1. Feuer- und Isolierbetonversätze, die Bindemittel und feuerfeste Zuschlagstoffe enthalten und sich hydrothermal härten lassen, dadurch gekennzeichnet, daß sie als Bindemittel eine Mischung aus Kalkhydraten und Aluminiumhydraten mit einem Molverhältnis CaO : $Al_2O_3$ von 1,5 : 1 bis 1 : 3 enthalten.

2. Feuer- und Isolierbetonversätze nach Anspruch 1, dadurch gekennzeichnet, daß sie 25 bis 40 Gewichtsprozent Bindemittelmischung und 60 bis 75 Gewichtsprozent Zuschlagstoffe enthalten.

3. Feuer- und Isolierbetonversätze nach Anspruch 1 oder 2, dadurch gekennzeichnet, daß die Bindemittelmischung aus Kalkhydrat und Aluminiumtrihydroxid besteht.

4. Feuer- und Isolierbetonversätze nach Anspruch 3, dadurch abgewandelt, daß das Aluminiumtrihydroxid bis zu etwa 50 Gewichtsprozent durch Aluminiummonohydroxid (Böhmit) ersetzt ist.

5. Feuer- und Isolierbetonversätze nach einem der Ansprüche 1 bis 4, dadurch gekennzeichnet, daß sie zur Herstellung von Feuerbetonen Körner von neutralen oder basischen feuerfesten Zuschlagstoffen, wie hochgebrannte Schamotte, Sillimanit, Bauxit, Mullit, braunen Elektrokorund, weißen Elektrokorund, tabular Alumina, Chromerz, Sintermagnesit, Chrommagnesit oder Schmelzprodukte, und zur Herstellung von Isolierbetonen Körner von Blähton, Vermiculit, Perlit, Leichtschamotte oder Hohlkugelkorund enthalten.

6. Verfahren zur Herstellung von Feuer- und Isolierbetonsteinen ohne Tonerdezemente, dadurch gekennzeichnet, daß man

a) Kalkhydrate und Aluminiumhydrate in einem Molverhältnis $CaO : Al_2O_3$ von 1,5 : 1 bis 1 : 3 vermischt,
b) der erhaltenen Bindemittelmischung Körner von feuerfesten Zuschlagstoffen zumischt,
c) den erhaltenen Feuer- und Isolierbetonversatz mit Wasser entsprechend dem einzuhaltenden Konsistenzmaß versetzt und homogenisiert,
d) den erhaltenen Beton formt und
e) eine hydrothermale Härtung bei 110 bis 190° C durchführt.

7. Verfahren nach Anspruch 6, dadurch gekennzeichnet, daß man die hydrothermale Härtung (e) 2 bis 24 Stunden durchführt.

8. Verfahren nach Anspruch 6 oder 7, dadurch gekennzeichnet, daß man den Betonstein nach der hydrothermalen Härtung trocknet.

9. Verwendung der nach dem Verfahren der Ansprüche 6 bis 8 hergestellten Feuer- und Isolierbetonsteine als Fertigbauteile für den Aufbau, die Auskleidung und Reparatur von industriellen Öfen.

**Claims**

1. Refractory and insulation concrete mixtures which contain binders and refractory aggregates and which can be hardened in a hydrothermal manner, characterized in that they contain as binders a mixture of calcium hydroxides and aluminium hydroxides with a $CaO : Al_2O_3$ molar ratio of 1.5 : 1 to 1 : 3.

2. Refractory and insulation concrete mixtures according to claim 1, characterized in that they contain 25 to 40% by weight of binder mixture and 60 to 75% by weight of aggregates.

3. Refractory and insulation concrete mixtures according to claims 1 or 2, characterized in that the binder mixture consists of calcium hydroxide and aluminium trihydroxide.

4. Refractory and insulation concrete mixtures according to claim 3 modified in that the aluminium trihydroxide is replaced up to 50% by weight by aluminium monohydroxide (boehmite).

5. Refractory and insulation concrete mixtures according to one of the claims 1 to 4, characterized in that for producing refractory concretes, they contain particles of neutral or basic refractory aggregates, such as hard-fired chamotte, sillimanite, bauxite, mullite, bron electrocorundum, white electrocorundum, tabular alumina, chromium ore, sintered magnesite, chromium magnesite for melted products, and for producing insulated concretes they contain particles of expanded clay, vermiculite, pearlite, lightweight chamotte and hollow spherical corundum.

6. Process for producing refractory and insulation concrete blocks without high alumina cements, characterized in that

a) calcium hydroxides and aluminium hydroxides are mixed in a $CaO : Al_2O_3$ molar ratio of 1.5 : 1 to 1 : 3;
b) particles of refractory aggregates are admixed with the binder mixture obtained;
c) the refractory and insulation concrete mixture is mixed with water in accordance with the degree of consistency to be maintained and is homogenized;
d) the concrete is shaped, and
e) undergoes hydrothermal hardening at 110 to 190° C.

7. Process according to claim 6, characterized in that hydrothermal hardening (3) is performed for 2 to 24 hours.

8. Process according to claims 6 or 7, characterized in that the concrete blocks are dried after hydrothermal hardening.

9. Use of the refractory and insulation concrete blocks produced according to the process of claims 6 to 8 as finished components for the construction, lining and repair of industrial furnaces.

**Revendications**

1. Compositions de béton réfractaire et isolant contenant des liants et des agrégats réfractaires et pouvant être durcies hydrothermiquement, caractérisées par le fait qu'elles contiennent comme liant un mélange d'hydrates de chaux et d'hydrates d'aluminium présentant un rapport molaire $CaO : Al_2O_3$ compris entre 1,5 : 1 et 1 : 3.

2. Compositions de béton réfractaire et isolant selon la revendication 1, caractérisées par le fait qu'elles contiennent 25 à 40% en poids de mélange de liant et 60 à 75% en poids d'agrégats.

3. Compositions de béton réfractaire et isolant selon l'une des revendications 1 et 2, caractérisées par le fait que le mélange de liant est formé d'hydrate de chaux et de trihydroxyde d'aluminium.

4. Compositions de béton réfractaire et isolant selon la revendication 3, modifiées par le fait que le trihydroxyde d'aluminium est remplacé jusqu'à concurrence d'environ 50% en poids par du monohydroxyde d'aluminium (böhmite).

5. Compositions selon l'une des revendications 1 à 4, caractérisées par le fait que pour la fabrication de bétons réfractaires, elles contiennent des grains d'agrégats réfractaires neutres ou basiques tels que la chamotte fortement calcinée, la sillimanite, la bauxite, la mullite, l'électro-corindon brun, l'électro-corindon blanc, l'alumine tabulaire, le minerai de chrome, la magnésite frittée, la magnésite de chrome ou des produits de fusion et que pour la fabrication de bétons isolants, elles contiennent des grains d'argile expansée, de vermiculite, de perlite, de chamotte légère ou de corindon en sphères creuses.

6. Procédé de fabrication de briques de béton réfractaire et isolant sans ciments alumineux, caractérisé par le fait que:

a) l'on mélange des hydrates de chaux et des hydrates d'aluminium en un rapport molaire $CaO : Al_2O_3$ compris entre 1,5 : 1 et 1 : 3,
b) on incorpore au mélange de liant obtenu des grains d'agrégats réfractaires,
c) on ajoute de l'eau à la composition de béton réfractaire et isolant obtenue, conformément à la consistance à respecter et on homogénéise,
d) on façonne le béton obtenu et
e) on effectue un durcissement hydrothermique entre 110 et 190°C.

7. Procédé selon la revendication 6, caractérisé par le fait que l'on effectue le durcissement hydrothermique (e) pendant 2 à 24 heures.

8. Procédé selon l'une des revendications 6 et 7, caractérisé par le fait qu'après le durcissement hydrothermique, on sèche la brique de béton.

9. Application des briques de béton réfractaire et isolant fabriquées selon le procédé des revendications 6 à 8 comme éléments préfabriqués pour la construction, le garnissage et la réparation de fours industriels.